# EUROPEAN PATENT APPLICATION

(11) **EP 4 752 041 A1**
(43) Date of publication of application: **03.06.2026**
(21) Application number: 25214467.0
(22) Date of filing: 07.11.2025
(51) Int. Cl.: B62D 25/08, B62D 25/04, B62D 29/00

(54) **VEHICLE FRONT STRUCTURE**

(30) Priority: 29.11.2024 JP 2024208927
(71) Applicant: TOYOTA JIDOSHA KABUSHIKI KAISHA, Toyota-shi, Aichi-ken 471-8571 (JP)
(72) Inventor: AMEMIYA, Koji, TOYOTA-SHI, AICHI-KEN, 471-8571 (JP); UJU, Shizuma, TOYOTA-SHI, AICHI-KEN, 471-8571 (JP); KOTAKI, Hiromu, TOYOTA-SHI, AICHI-KEN, 471-8571 (JP)
(74) Representative: Cabinet Beau de Loménie

(57) **Abstract**

A vehicle front structure (10) includes a main body portion integrally provided to include a vertical wall portion (34), a first framework portion including a plurality of first ribs (58; 72) provided on the main body portion so as to extend in a vehicle front-rear direction and erected from the vertical wall portion (34) along a vehicle width direction, and a second framework portion including a plurality of second ribs (64; 78) connected to a front end part of the first framework portion, provided on the main body portion so as to extend to the front pillar lower portion (26) while leaning downward in a vehicle-height direction as they extend rearward in the vehicle front-rear direction, and provided to be erected from the vertical wall portion (34) along the vehicle width direction. The first framework portion and the second framework portion are joined to the front pillar lower portion (26).

## Description

### BACKGROUND OF THE INVENTION

### 1. Field of the Invention

The invention relates to a vehicle front structure.

### 2. Description of Related Art

CN217575374U discloses a technique relating to a vehicle front structure including a cast body formed by die-casting. In this related art, the cast body is integrally formed from a suspension tower portion for supporting an upper end part of a front wheel suspension to a front pillar constituting a front end portion of a door opening. A wheel house portion provided on a vehicle rear side of the front wheel is formed between the suspension tower portion and the front pillar. First ribs and second ribs are formed in the wheel house portion, and the second rib is formed so as to lean toward the lower side of the vehicle as it goes from the upper end part of the suspension tower portion to the rear side of the vehicle. Furthermore, the first rib is formed radially from the center side of the front wheel between the plurality of second ribs.

### SUMMARY OF THE INVENTION

In the above related art, it is described that the cast body is reinforced by forming the first ribs and the second ribs, but further improvement is required from the viewpoint of rigidity against loads input to a suspension tower portion via the front wheel and the suspension.

In consideration of the above fact, the present invention has an object to provide a vehicle front structure that can further improve rigidity against loads input to suspension tower portions via front wheels and suspensions.

A first aspect of the invention relates to a vehicle front structure including a suspension tower portion that supports an upper end part of a suspension of a front wheel, a front pillar lower portion, a vertical wall portion extending in a vehicle front-rear direction and a vehicle-height direction, a main body portion that includes the vertical wall portion and is integrally provided from the suspension tower portion to the front pillar lower portion side, a first framework portion including a plurality of first ribs that are provided on the main body portion so as to extend in the vehicle front-rear direction from an upper end part side of the suspension tower portion to an upper end part side of the front pillar lower portion, and are provided to be erected on the vertical wall portion along a vehicle width direction and to be spaced apart from each other, and a second framework portion including a plurality of second ribs that are connected to a front end part of the first framework portion, provided on the main body portion so as to extend to the front pillar lower portion while leaning downward in a vehicle-height direction as the plurality of second ribs extend rearward in the vehicle front-rear direction, and provided to be erected from the vertical wall portion along the vehicle width direction and spaced apart from each other. The first framework portion and the second framework portion are joined to the front pillar lower portion.

The vehicle front structure according to the first aspect is configured to include the main body portion, the first framework portion, and the second framework portion. The main body portion is formed integrally from the suspension tower portion for supporting the upper end portion of the suspension for the front wheel up to the front pillar lower portion side, and is configured to include the vertical wall portion extending in the vehicle front-rear direction and the vehicle-height direction. The first framework portion and the second framework portion are provided on the main body portion.

Here, the first framework portion is constituted by a first rib group including the plurality of first ribs that are provided in the vehicle front-rear direction from the upper end part side of the suspension tower portion up to the upper end part side of the front pillar lower portion, and are provided to be erected along the vehicle width direction from the vertical wall portion constituting the main body portion and spaced apart from each other. Furthermore, the second framework portion is constituted by a second rib group including the plurality of second ribs that are connected to the front end portion of the first framework portion, provided up to the front pillar lower portion while leaning downward in the vehicle-height direction as it goes rearward in the vehicle front-rear direction, and provided to be erected along the vehicle width direction from the vertical wall portion and spaced apart from each other.

As described above, the first framework portion and the second framework portion each of which is constituted by a rib group including a plurality of ribs are provided on the main body portion up to the front pillar lower portion, thereby improving the rigidity of the main body portion itself. As a result, in the present aspect, the rigidity against loads input to the suspension tower portion along the vehicle front-rear direction and the vehicle-height direction is further improved.

Furthermore, in the present aspect, the first framework portion and the second framework portion are joined to the front pillar lower portion. In other words, in the present embodiment, a so-called truss structure is apparently formed by the first framework portion, the second framework portion, and the front pillar lower portion. In such a truss structure, these portions are mutually supported at each portion, so that the bending moment is hard to occur and thus deformation is restrained.

Furthermore, in the present aspect, it is possible to distribute a load input to the suspension tower portion via front wheels and suspensions by a path for transmitting the load to the front pillar lower portion side along the vehicle front-rear direction via the first framework portion and a path that goes downward in the vehicle-height direction as it goes rearward in the vehicle front-rear direction via the second framework portion and transmits the load to a rocker side via a connecting portion where the front pillar lower portion is connected to a rocker. As a result, the load-bearing performance of the main body portion when a large load is input via the front wheels and the suspensions is improved.

Here, "joined" means that the first framework portion and the second framework portion apparently form a truss structure in relation to the front pillar lower portion, and it does not necessarily mean joint by bolt fastening or the like. Therefore, for example, it is needed only that the first framework portion and the second framework portion are directly or indirectly continuously connected to the front pillar lower portion, and the first framework portion and the second framework portion and the front pillar lower portion may abut against each other.

A second aspect of the invention relates to a vehicle front structure including a suspension tower portion that supports an upper end part of a suspension of a front wheel, a front pillar lower portion, a vertical wall portion extending in a vehicle front-rear direction and a vehicle-height direction, a main body portion that includes the vertical wall portion and is integrally provided from the suspension tower portion to the front pillar lower portion side, a first framework portion including a first bead that is provided on the main body portion so as to extend in the vehicle front-rear direction from an upper end part side of the suspension tower portion to an upper end part side of the front pillar lower portion, and protrudes from the vertical wall portion in a thickness direction of the vertical wall portion, a second framework portion including a second bead that is connected to a front end part of the first framework portion, provided on the main body portion so as to extend downward in a vehicle-height direction as the second bead extends rearward in a vehicle front-rear direction, and protrudes from the vertical wall portion in the thickness direction of the vertical wall portion. The first framework portion and the second framework portion are connected to the front pillar lower portion.

The vehicle front structure according to the second aspect is configured to include the main body portion, the first framework portion, and the second framework portion. The main body portion is integrally formed from the suspension tower portion for supporting an upper end portion of a suspension for a front wheel up to the front pillar lower portion side, and is configured to include the vertical wall portion extending in the vehicle front-rear direction and the vehicle-height direction. The first framework portion and the second framework portion are provided on the main body.

Here, the first framework portion is constituted by the first bead that is provided in the vehicle front-rear direction from the upper end part side of the suspension tower portion up to the upper end part side of the front pillar lower portion, and is formed to protrude from the vertical wall portion constituting the main body portion in the thickness direction of the vertical wall portion. The second framework portion is constituted by the second bead that is connected to the front end portion of the first framework portion, provided to lean downward in the vehicle-height direction as it goes rearward in the vehicle front-rear direction, and formed so as to protrude from the vertical wall portion constituting the main body portion in the thickness direction of the vertical wall portion.

As described above, the rigidity of the main body itself is improved by providing the first framework portion and the second frameworks portion each of which is constituted by a bead formed so as to protrude from the main body portion in the thickness direction of the vertical wall portion, thereby improving the rigidity of the main body portion itself. As a result, in the present aspect, the rigidity is further improved against a load input to the suspension tower portion in the vehicle front-rear direction and the vehicle-height direction.

Furthermore, in the present aspect, the first framework portion and the second framework portion are joined to the front pillar lower portion. In other words, in the present aspect, a so-called truss structure is apparently formed by the first framework portion, the second framework portion, and the front pillar lower portion. This further improves the rigidity of the first framework portion and the second framework portion as well as the rigidity of the main body portion itself.

Furthermore, in the present aspect, a load input to the suspension tower portion via the front wheels and the suspensions can be dispersed by a path for transmitting the load to the front pillar lower portion side along the vehicle front-rear direction via the first framework portion and a path that goes downward in the vehicle-height direction as it goes rearward in the vehicle front-rear direction via the second framework portion and transmits the load to a rocker side via a connecting portion where the front pillar lower portion is connected to the rocker. As a result, the load-bearing performance of the main body portion is improved when a large load is input to the main body portion via the front wheels and the suspensions.

Here, "joined" means that the first framework portion and the second framework portion apparently forms a truss structure in relation to the front pillar lower portion, and it does not necessarily mean joint by bolt fastening or the like. Therefore, for example, it is needed only that the first framework portion and the second framework portion are directly or indirectly continuously connected to the front pillar lower portion, and the first framework portion and the second framework portion and the front pillar lower portion may abut against each other.

The bead may be formed by padding the vertical wall portion. In other words, a portion where the bead is formed may be thicker than the surrounding portion of the bead. Furthermore, protrusions may be formed without substantially changing the thickness of the vertical wall portion.

In the vehicle front structure according to the first aspect may further include at least either a plurality of first connecting ribs that connect the plurality of first ribs or a plurality of second connecting ribs that connect the plurality of second ribs.

The first framework portion may be configured to include a plurality of connecting ribs for connecting the plurality of first ribs to each other. As a result, as compared with a case where the connecting ribs are not provided, the first framework portion of the present aspect can further improve the rigidity of the first framework portion, and enhances a load-transmission effect on a load input along the vehicle front-rear direction.

Furthermore, the second framework group may be configured to include a plurality of connecting ribs for connecting the plurality of second ribs to each other. As a result, as compared with a case where the connecting ribs are not provided, the second framework group in the present aspect further improves the rigidity of the second framework portion, and enhances the load-transmission effect on loads input along the vehicle front-rear direction and the vehicle-height direction.

In the present aspect, the plurality of connecting ribs may be provided on at least one of the first framework portion and the second framework portion. In other words, in the present aspect, the plurality of connecting ribs may be provided on the first framework portion, or the plurality of connecting ribs may be provided on the second framework portion. Furthermore, the plurality of connecting ribs may be provided on each of the first framework portion and the second framework portion.

Here, when considering the balance of rigidity for the plurality of connecting ribs, it is possible to more effectively utilize the rigidity-enhancing function of the apparent truss structure constituted by the first framework portion, the second framework portion, and the front pillar lower portion in a case where the connecting ribs are provided on the first framework portion and the second framework portion than that in a case where the connecting ribs are provided on the first framework portion or the second frame portion.

In the vehicle front structure according to the first aspect, at least some of the plurality of first connecting ribs are formed in a truss shape.

In the vehicle front structure according to the first aspect, at least some of the plurality of second connecting ribs are formed in a truss shape.

At least some of the connecting ribs for connecting the plurality of ribs together are formed in a truss shape, so that the rigidity of the rib group is further improved as compared with a case where the connecting ribs are provided to be substantially perpendicular to the ribs. Furthermore, the rigidity is more improved in a case where all of the connecting ribs are formed in a truss shape than that in a case where some of the connecting ribs are formed in a truss shape.

Furthermore, when considering the balance of rigidity for the plurality of connecting ribs formed in a truss shape, it is possible to more effectively utilize the rigidity-enhancing function of the apparent truss structure constituted by the first framework portion, the second framework portion, and the front pillar lower portion in a case where the truss-shaped connecting ribs are provided on the first framework portion and the second framework portion than that in a case where the truss-shaped connecting ribs are provided on the first framework portion or the second framework portion.

In the vehicle front structure according to the first aspect, the plurality of first ribs may be thicker than the plurality of first connecting ribs.

In the vehicle front structure according to the first aspect, the plurality of second ribs may be thicker than the plurality of second connecting ribs.

The plurality of ribs (first ribs, second ribs) are formed to be thicker than the plurality of connecting ribs, so that the rigidity is improved and the increase in weight caused by the formation of the plurality of connecting ribs is restrained. Note that the thicknesses of the first ribs, the second ribs, and the connecting ribs do not necessarily need to be constant along the vehicle front-rear direction.

In the vehicle front structure according to the first aspect, a position where the first framework portion is joined to the front pillar lower portion is higher in the vehicle-height direction than a position where the second framework portion is joined to the front pillar lower portion.

As described above, the vehicle front structure according to the present invention can further improve the rigidity against loads input to the suspension tower portion via the front wheels and the suspensions.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a perspective view of a vehicle to which a vehicle front structure according to an embodiment is applied as seen diagonally from a left-front and upper side of the vehicle;
FIG. 2 is a side view showing a main part of the vehicle front structure according to the present embodiment;
FIG. 3 is a side view showing a modification 1, which corresponds to FIG. 2;
FIG. 4 is a perspective view of a modification 2 as seen diagonally from a left-front and upper side of the vehicle; and
FIG. 5 is a side view showing a modification 3, which corresponds to FIG. 2.

### DETAILED DESCRIPTION OF EMBODIMENTS

A vehicle front structure according to an embodiment of the present invention will be described hereunder with reference to the drawings. Note that an arrow FR shown as appropriate in each drawing indicates "frontward" in a vehicle front-rear direction, and an arrow UP indicates "upward" in a vehicle-height direction. An arrow RH indicates "rightward" in a vehicle width direction, and indicates an outside in the vehicle width direction in the present embodiment. When description is made merely using directions of front-rear, up-down, and left-right, they are intended to indicate front-rear in a vehicle front-rear direction, up-down in a vehicle-height direction, and left-right in a vehicle left-right direction (vehicle width direction) unless otherwise specified.

### Configuration of Vehicle Front Structure

First, a configuration of a vehicle front structure according to the present embodiment will be described.

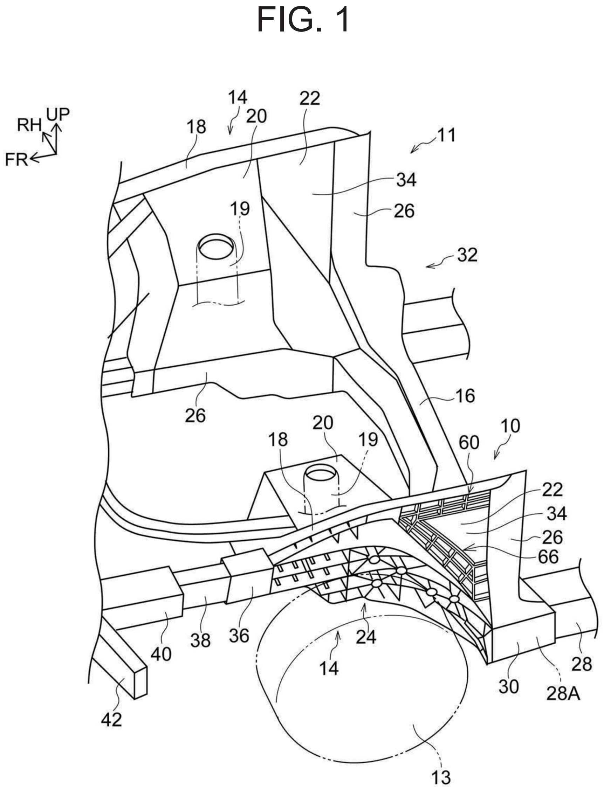

FIG. 1 shows a front portion (vehicle front portion) 11 of a vehicle 12 to which a vehicle front structure 10 according to the present embodiment is applied. Although not shown, the vehicle 12 is, for example, a battery electric vehicle, a fuel cell vehicle or the like that runs with power generated by a power unit.

The vehicle 12 shown in FIG. 1 is provided with wheel houses 14 on the left and right sides of a vehicle front portion 11 in which front wheels 13 are arranged respectively, and the wheel house 14 on the right side and the wheel house 14 on the left side are connected to each other by a cross member 16. An apron upper member 18 extends in the vehicle front-rear direction at the upper end part of each of the wheel houses 14, and a suspension tower 20 for supporting the upper end part of a suspension 19 for each of the front wheels 13 is provided on the inside of the apron upper member 18 in the vehicle width direction.

An upper member 22 extending in the vehicle-height direction and the vehicle front-rear direction is provided on the rear side of the suspension tower 20 and on the outer side of the suspension tower 20 in the vehicle width direction. A front side member 24 extending in the vehicle-height direction and the vehicle front-rear direction is provided below the suspension tower 20 and the upper member 22, and a front pillar lower 26 extending in the vehicle-height direction and the vehicle front-rear direction is provided on behind the upper member 22 and the front side member 24.

Furthermore, a connecting portion 30 to which a front end portion 28A of a rocker 28 extending to the outside of a floor panel (not shown) in the vehicle width direction and in the vehicle front-rear direction is connected is provided on the lower side of the front pillar lower 26. The front end portion 28A of the rocker 28 can be connected via the connecting portion 30, for example, by a bolt, welding, or the like.

Here, in the present embodiment, the left and right wheel houses 14 including the suspension towers 20 and the front side members 24, the left and right upper members 22, and the cross member 16 are integrally formed as a one-piece cast member (main body portion) 32 by casting using materials such as aluminum alloy and magnesium alloy.

In other words, the wheel houses 14 including the suspension towers 20 and the front side members 24, the upper members 22, the cross member 16, and the front pillar lowers 26 serve as parts of the one-piece cast member 32. For this reason, in the following description, these parts will be described as a suspension tower portion 20, a front side member portion 24, a wheel house portion 14, an upper member portion 22, a cross member portion 16, and a front pillar lower portion 26, respectively.

In the one-piece cast member 32 of the present embodiment, due to the structure of a mold, for example, the mold is slid outward in the vehicle width direction when outer surfaces in the vehicle width direction of the wheel house portion 14 and the upper member portion 22 are formed. Therefore, the wheel house portion 14 and the upper member portion 22 in the present embodiment are formed such that the outer sides thereof in the vehicle width direction are open.

### Wheel House Portion

First, the wheel house portion 14 will be described.

As described above, the wheel house portion 14 is configured to include the suspension tower portion 20 and the front side member portion 24. As shown in Fig. 1, the wheel house portion 14 has a vertical wall portion 34 extending in the vehicle front-rear direction and the vehicle-height direction inside a fender panel of the vehicle (not shown). Note that the vertical wall portion 34 is formed in a curved shape bulging inward in the vehicle width direction along the shape of the suspension tower portion 20 on the upper side of the front side member portion 24 described later.

A connecting portion 36 that has a rectangular cylindrical shape and extends in the vehicle-height direction is provided at the front end of the wheel house portion 14, and a beam member 38 and a crash box 40 extending in the vehicle front-rear direction are connected to the front end of the wheel house portion 14 via the connecting portion 36. A front bumper 42 extending in the vehicle width direction is connected to the front end of the crash box 40.

Furthermore, the apron upper member portion 18 is provided at the upper end part of the wheel house portion 14 as described above, and the front side member portion 24 extends in the vehicle front-rear direction at the lower part of the wheel house portion 14.

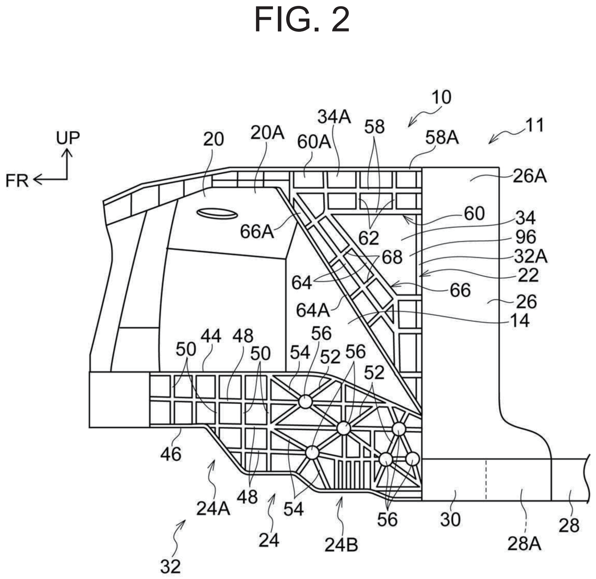

As shown in FIG. 2, the front side member portion 24 is configured to include an upper wall portion 44 constituting an upper end part of the front side member portion 24 and a lower wall portion 46 constituting a lower end part of the front side member portion 24, each of the upper wall portion 44 and the lower wall portion 46 extending along the vehicle front-rear direction. A plurality of lateral wall portions 48 extend along the vehicle front-rear direction between the upper wall portion 44 and the lower wall portion 46. The upper wall portion 44, the lower wall portion 46, and the lateral wall portion 48 are each provided to be erected outward in the vehicle width direction from the vertical wall portion 34.

Furthermore, on a front portion 24A side of the front side member portion 24, a plurality of vertical ribs 50 are provided along the vehicle height direction between the upper wall portion 44 and the lower wall portion 46, and these vertical ribs 50 are arranged along the vehicle front-rear direction.

Furthermore, on a rear portion 24B side of the front side member portion 24, a plurality of slant ribs 52 that lean toward the upper side of the vehicle as they go to the rear side of the vehicle and a plurality of slant ribs 54 that lean toward the lower side of the vehicle as they go toward the rear side of the vehicle are provided between the upper wall portion 44 and the lower wall portion 46, and they are connected to each other to form an apparent truss structure.

Furthermore, substantially cylindrical or columnar bosses 56 are provided at the intersections between the slant ribs 52, 54 and the lateral wall portions 48. These bosses 56 serve as bases against which ejection pins (not shown) abut in a molding process for a one-piece cast member 32 including a wheel house 14, the ejection pins being used when the one-piece cast member 32 is released from a mold. For this reason, the bosses 56 are arranged to be offset from one another in the vehicle front-rear direction such that the bosses 56 do not overlap with one another in the height direction in order to release the one-piece cast member 32 from the mold in a balanced manner.

The positions of the bosses 56 can be appropriately changed depending on the mass balance of the one-piece cast member 32. Furthermore, the bosses 56 may be used not only to serve as bases against which the ejection pins abut, but also to serve as bases for fastening to another component.

### Upper Member Portion

In the present embodiment, the upper member portion 22 is provided between the suspension tower portion 20 of the wheel house portion 14 and the front pillar lower portion 26 in the vehicle front-rear direction and on the upper side of the front side member portion 24. In other words, the front pillar lower portion 26 extending in the vehicle-height direction and the vehicle front-rear direction is provided behind the upper member portion 22 and the front side member portion 24.

The upper member portion 22 also includes the vertical wall portion 34 that is connected to the wheel house portion 14 on the inside in the vehicle width direction and extends in the vehicle front-rear direction and the vehicle height direction. In the present embodiment, a plurality of (two in this example) first ribs 58 are provided from the upper end part 20A side of the suspension tower portion 20 up to the upper end part 26A side of the front pillar lower portion 26 on the upper end part 34A of the vertical wall portion 34 so as to be erected from the vertical wall portion 34 along the vehicle width direction, and extend substantially linearly along the vehicle front-rear direction. In the present embodiment, a first rib group (first framework portion) 60 is configured to include these first ribs 58. A rib 58A provided above the first ribs 58 constitutes the upper end of the one-piece cast member 32.

Here, a rear wall portion 32A constituting the rear end of the one-piece cast member 32 is provided between the upper member portion 22 and the front pillar lower portion 26. The rear end of the first rib group 60 is connected to the rear wall portion 32A, and the first rib group 60 and the front pillar lower portion 26 are continuously connected (joined) to each other via the rear wall portion 32A. Note that the front pillar lower portion 26 may be connected to the rear wall portion 32A via a bolt or the like.

In the first rib group 60, a plurality of first connecting ribs 62 that are substantially perpendicular to the first ribs 58 arranged to be spaced apart from each other and connect the first ribs 58 to each other up and down are arranged along the vehicle front-rear direction. The first ribs 58 are thicker than the first connecting ribs 62. In the present embodiment, "substantially perpendicular" does not only mean a case where the first connecting ribs 62 are completely perpendicular, but also means a case where the angle is deviated from the perfect perpendicular angle within an error.

Furthermore, a plurality of (two in this example) second ribs 64 connected to a front end portion 60A of the first rib group 60 are provided on the vertical wall portion 34 so as to be erected from the vertical wall portion 34 along the vehicle width direction. These second ribs 64 lean downward in the vehicle height direction, specifically toward the connecting portion 30 which is connected to the front end portion 28A of the rocker 28 provided on the lower side of the front pillar lower portion 26 as they go rearward in the vehicle front-rear direction, and extend substantially linearly from the front end portion 60A of the first rib group 60 up to the front pillar lower portion 26. In the present embodiment, a second rib group (second framework portion) 66 is configured to include these second ribs 64. Note that a rib 64A provided on the lower side of the second rib 64 constitutes the upper end of the wheel house portion 14.

Similarly to the first rib group 60, the rear end of the second rib group 66 is connected to the rear wall portion 32A of the one-piece cast member 32. The second rib group 66 and the front pillar lower portion 26 are continuously connected (joined) to each other via this rear wall portion 32A.

In the second rib group 66, a plurality of second connecting ribs 68 that are substantially perpendicular to the second ribs 64 spaced apart from each other and connect the second ribs 64 to each other are arranged in the vehicle height direction and the vehicle front-rear direction. Note that the second ribs 64 are thicker than the second connecting ribs 68.

As described above, in the present embodiment, the front end portion 60A of the first rib group 60 and the front end portion 66A of the second rib group 66 are connected to each other, the first rib group 60 extends along the vehicle front-rear direction, and the second rib group 66 extends in a direction toward the lower side of the vehicle as it goes toward the rear side of the vehicle.

The rear end of the first rib group 60 and the rear end of the second rib group 66 are each connected to the front pillar lower portion 26 via the rear wall portion 32A of the one-piece cast member 32. In other words, in the present embodiment, the so-called framework portions configured by the first rib group 60, the second rib group 66, and the front pillar lower portion 26 forms a triangle shape in a side view of the vehicle, and apparently constitutes a truss structure.

As described above, the front pillar lower portion 26 is provided behind the upper member 22 and the front side member 24. A front end portion of a roof side rail (not shown) that supports the upper end part of a front door and extends in the vehicle front-rear direction is joined to the upper end part 26A of the front pillar lower portion 26. Furthermore, the connecting portion 30 to which the front end portion 28A of the rocker 28 is joined is provided on the lower side of the front pillar lower portion 26 as described above.

### Action and Effect of Vehicle Front Structure

Next, an action and an effect of the vehicle front structure according to the present embodiment will be described.

In the present embodiment, as shown in FIG. 1, the suspension tower portion 20, the front side member portion 24, the upper member portion 22 and the front pillar lower portion 26 are integrally molded as the one-piece cast member 32, and the one-piece cast member 32 is provided with the first rib group 60 as the first framework portion and the second rib group 66 as the second framework portion.

The first rib group 60 is configured to include the plurality of first ribs 58 that extend continuously and substantially linearly along the vehicle front-rear direction from the upper end part 20A side of the suspension tower portion 20 up to the upper end part 26A side of the front pillar lower portion 26, and are provided to be erected along the vehicle width direction from the vertical wall portion 34 constituting the one-piece cast member 32 and spaced apart from each other.

Furthermore, the second rib group 66 is configured to include the plurality of second ribs 64 that are connected to the front end portion 60A of the first rib group 60, extend substantially linearly toward the front pillar lower portion 26 while leaning downward in the vehicle height direction as they go rearward in the vehicle front-rear direction, and provided to be erected from the vertical wall portion 34 along the vehicle width direction and spaced apart from each other.

As described above, in the one-piece cast member 32, the first rib group 60 and the second rib group 66 that are constituted by the plurality of first ribs 58 and the plurality of second ribs 64 respectively are provided up to the front pillar lower portion 26, which makes it possible to improve the rigidity of the one-piece cast member 32 itself. As a result, in the present embodiment, it is possible to further improve the rigidity against loads input to the suspension tower portion 20 in the vehicle front-rear direction and the vehicle-height direction, and it is possible to improve the handling stability and NV performance of the vehicle 12 during driving.

Furthermore, in the present embodiment, an apparent truss structure is constituted by the first rib group 60, the second rib group 66, and the front pillar lower portion 26. In such a truss structure, these portions are mutually supported at each portion, so that the bending moment is hard to occur and thus deformation is restrained. To put it the other way around, the rigidity of the first rib group 60 and the second rib group 66 is further improved, and the rigidity of the one-piece cast member 32 itself is also improved.

In the present embodiment, a load input to the suspension tower portion 20 via the front wheel 13 and the suspension 19 can be distributed by a path for transmitting the load to the front pillar lower portion 26 side along the vehicle front-rear direction via the first rib group 60 and a path that goes downward in the vehicle-height direction as it goes rearward in the vehicle front-rear direction via the second rib group 66 and transmits the load to the rocker side via the connecting portion 30 where the front pillar lower portion 26 is connected to the rocker. As a result, it is possible to improve the load-bearing performance of the one-piece cast member 32 when a large load is input via the front wheel 13 and the suspension 19.

Here, in the present embodiment, the first rib group 60 is configured to include the plurality of first connecting ribs 62 that are substantially perpendicular to the plurality of first ribs 58 and connect the plurality of first ribs 58 to each other up and down. As a result, the first rib group 60 in the present embodiment can further improve the rigidity of the first rib group 60 as compared with a case in which the first connecting ribs 62 are not provided, and can improve a load-transmission effect on a load input along the vehicle front-rear direction.

In the present embodiment, the second rib group 66 is configured to include the plurality of second connecting ribs 68 that are substantially perpendicular to the plurality of second ribs 64 and connect the plurality of second ribs 64 to each other. As a result, the second rib group 66 in the present embodiment can further improve the rigidity of the second rib group 66 as compared with a case in which the second connecting ribs 68 are not provided, and can improve the load-transmission effect on a load input along the vehicle front-rear direction and the vehicle-height direction.

In the present embodiment, the first rib 58 is thicker than the first connecting rib 62, and the second rib 64 is thicker than the second connecting rib 68. As a result, it is possible to improve the rigidity of the first rib group 60 constituted by the plurality of first ribs 58 and the second rib group 66 constituted by the plurality of second ribs 64, and it is also possible to restrain an increase in weight due to the formation of the plurality of first connecting ribs 62 and the plurality of second connecting ribs 68.

With respect to the thicknesses of the plurality of first ribs 58 and the plurality of second ribs 64, the first ribs 58 and the second ribs 64 are not required to be formed substantially at the same thickness, and may be formed at different thicknesses. Furthermore, with respect to the thicknesses of the first ribs 58 and the second ribs 64, the thicknesses are not required to be substantially constant along the vehicle front-rear direction, and may be thicker toward the rear side of the vehicle. The same as the plurality of first ribs 58 and the plurality of second ribs 64 is true of the plurality of first connecting ribs 62 and the plurality of second connecting ribs 68.

### Modifications of Present Embodiment

In the present embodiment, in the first rib group 60, the plurality of first connecting ribs 62 are formed to be approximately perpendicular to the plurality of first ribs 58, and in the second rib group 66, the plurality of second connecting ribs 68 are formed to be approximately perpendicular to the plurality of second ribs 64. However, the shapes of the first rib group 60 and the second rib group 66 are not limited to this style.

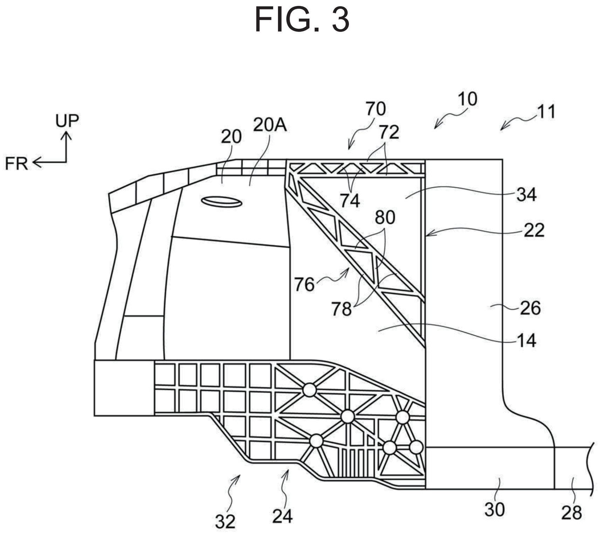

For example, as a first modification 1, as shown in FIG. 3, a first rib group (first framework portion) 70 may configured such that a plurality of first connecting ribs 74 for connecting a plurality of first ribs 72 to each other are formed in a truss shape, and a second rib group (second framework portion) 76 may be configured such that a plurality of second connecting ribs 80 for connecting a plurality of second ribs 78 to each other are formed in a truss shape.

As described above, the plurality of first connecting ribs 74 and the plurality of second connecting ribs 80 that connect the first ribs 72 to each other and connect the second ribs 78 to each other respectively are formed in a truss shape, which makes it possible to further improve the rigidity of the first rib group 70 and the second rib group 76 as compared with a case where the first connecting rib 62 and the second connecting rib 68 are provided to be approximately perpendicular to the first ribs 58 and the second ribs 64 as shown in FIG. 2.

Furthermore, in the first connecting ribs 74 and the second connecting ribs 80 shown in FIG. 3, for example, when considering the flow of molten metal during molding of the one-piece cast member 32, it is not necessarily required to form all of the first and second connecting ribs 74 and 80 in a truss shape, and at least parts of the first rib group 70 and the second rib group 76 may be formed in a truss shape.

Furthermore, the first connecting ribs 74 of the first rib group 70 and the second connecting ribs 80 of the second rib group 76 are not necessarily required to be formed in a truss shape, and the connecting ribs of either the first rib group 70 or the second rib group 76 may be formed in a truss shape.

In the present embodiment, as shown in FIG. 2, with respect to the first rib group 60 and the second rib group 66, the first rib group 60 extends substantially linearly along the vehicle front-rear direction from the upper end part 20A side of the suspension tower portion 20 to the upper end part 26A side of the front pillar lower portion 26. The second rib group 66 is connected to the front end portion 60A of the first rib group 60, and extends substantially linearly while leaning downward in the vehicle-height direction as it goes rearward in the vehicle front-rear direction.

However, in the present embodiment, as long as the first rib group 60, the second rib group 66 and the front pillar lower portion 26 are connected to one another, the shapes of the first rib group 60 and the second rib group 66 are not limited to the above ones.

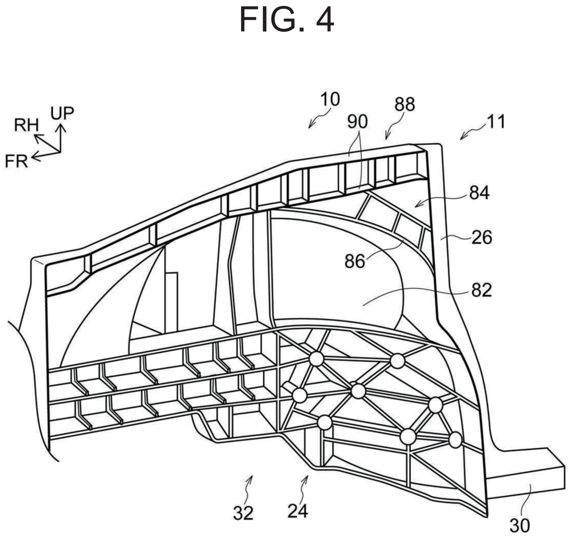

For example, as a second modification, as shown in FIG. 4, second ribs 86 constituting a second rib group 84 may be formed in a curved shape so as to match the shape of the wheel house portion 82. In other words, the plurality of second ribs 64 constituting the second rib group 66 are not required to be formed approximately in parallel to each other as shown in FIG. 2. The same as the second rib group 84 is true of a plurality of first ribs 90 constituting a first rib group 88.

In the above-described embodiment, for example, as shown in FIG. 2, the first framework portion is constituted by the first rib group 60 including the plurality of first ribs 58, and the second framework portion is constituted by the second rib group 66 including the plurality of second ribs 64, but the number of first ribs 58 in the first rib group 60 and the number of second ribs 64 in the second rib group 66 are not required to be the same. For example, the number of second ribs 64 in the second rib group 66 is set to be larger than the number of first ribs 58 in the first rib group 60, which is more effective to an input to the suspension tower 20 in the vehicle front-rear direction.

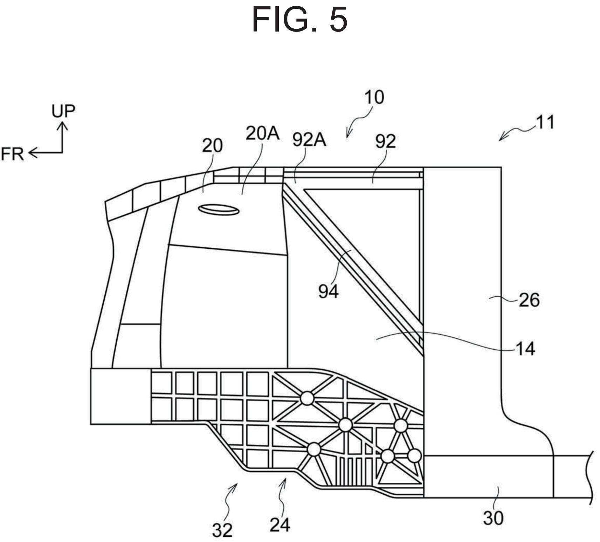

Furthermore, for example, as a modification 3, as shown in FIG. 5, the first framework portion may be a first bead 92 that is formed to protrude in the thickness direction of the vertical wall portion 34 constituting the one-piece cast member 32 and extends in the vehicle front-rear direction from the upper end part 20A side of the suspension tower portion 20 to the upper end part 26A side of the front pillar lower portion 26. The second framework portion may be a second bead 94 that is formed to protrude in the thickness direction of the vertical wall portion 34, is connected to a front end portion 92A of the first bead 92, and extends to the front pillar lower portion 26 while leaning downward in the vehicle-height direction as it goes rearward in the vehicle front-rear direction.

As a result, the configuration shown in the modification 3 can attain substantially the same effect as the case where the first framework portion is constituted by the first rib group 60 and the second framework portion is constituted by the second rib group 66 as shown in FIG. 2. Furthermore, in the case of the first bead 92 and the second bead 94, the flow of molten metal during molding of the one-piece cast member 32 is improved as compared with the case where the ribs are provided. In the present embodiment, one first bead 92 and one second bead 94 are provided, but it goes without saying that a plurality of beads may be provided for each of the first and second beads 92 and 94.

Here, the first bead 92 is formed to protrude in the thickness direction of the vertical wall portion 34, but the first bead 92 may be made larger in thickness than the surrounding of the first bead 92 by the amount of the protrusion in the thickness direction of the vertical wall portion 34, or may be shaped to protrude without changing the thickness of the first bead 92 with respect to the thickness of the surrounding of the first bead 92. The same as the second bead 94 is true of the first bead 92.

Furthermore, in the present embodiment, as shown in FIG. 2, the so-called framework portion formed by the first rib group 60, the second rib group 66, and the front pillar lower portion 26 forms a triangular shape as viewed from a side of the vehicle, and a triangular area 96 is provided inside the first rib group 60, the second rib group 66, and the front pillar lower portion 26.

In the triangular area 96, for example, although not shown, a rib may extend from the second connecting rib 68 of the second rib group 66 up to the front pillar lower portion 26. In the triangular area 96, for example, an opening portion or the like for maintenance may be formed in the triangular area 96. By forming an opening portion as described above, it is possible to reduce the weight of the vehicle 10.

### Supplementary Explanation of the Embodiment

In the above embodiment, an example of the one-piece cast member 32 in which the left and right wheel house portions 14 and the cross member portion 16 are formed integrally with one another by casting as shown in FIG. 1 has been described, but the embodiment is not limited to this style.

For example, although not shown, a right-side cast member formed by integrally casting a right wheel house portion 14 and a right half of a cross member portion 16, and a left-side cast member formed by integrally casting a left wheel house portion 14 and a left half of the cross member portion 16 may be joined to each other by a joint portion to be integrated with each other. In this case, a cast member can be formed to be smaller than the one-piece cast member 32, so that it is possible to reduce costs associated with a mold mechanism including mold facilities.

Here, for example, the tip of the right half of the cross member portion 16 and the tip of the left half of the cross member portion 16 are overlapped with each other in the vehicle front-rear direction or the vehicle-height direction and joined to each other by the joint portion. Furthermore, the tip of the right half of the cross member portion 16 and the tip of the left half of the cross member portion 16 may be joined to each other by a separate member in a state where they are in contact with each other.

Furthermore, in the present embodiment, the front side member 24 is molded integrally with the wheel house portion 14, but it is not necessarily required to be formed integrally. The front side member 24 may be fixed as a separate member below the wheel house portion 14. In this case, it is possible to use different materials for the wheel house portion 14 and the front side member 24, and it is possible to change a manufacturing method such as extrusion molding.

Furthermore, in the present embodiment, the front pillar lower portion 26 is molded integrally with the one-piece cast member 32, but it is not necessarily required to be molded integrally. It goes without saying that the front pillar lower portion 26 may be fixed as a separate member on the vehicle rear side of the one-piece cast member 32. In this case, it is possible to use different materials for the front pillar lower portion 26 and the one-piece cast member 32, and it is possible to change a manufacturing method such as press molding for the front pillar lower portion 26.

Although one embodiment of the present invention has been described above, the present invention is not limited to such an embodiment, and the embodiment may be appropriately combined with various modifications, and it goes without saying that the present invention may be implemented in various aspects without departing from the scope of the claims.

## Claims

1. A vehicle front structure (10) comprising:
a suspension tower portion (20) for supporting an upper end part of a suspension (19) of a front wheel (13);
a front pillar lower portion (26);
a vertical wall portion (34) extending in a vehicle front-rear direction and a vehicle-height direction;
a main body portion that includes the vertical wall portion (34) and is integrally provided from the suspension tower portion (20) to the front pillar lower portion (26) side;
a first framework portion including a plurality of first ribs (58; 72) that are provided on the main body portion so as to extend in the vehicle front-rear direction from an upper end part side of the suspension tower portion (20) to an upper end part side of the front pillar lower portion (26), and are provided to be erected along a vehicle width direction from the vertical wall portion (34) and spaced apart from each other; and
a second framework portion including a plurality of second ribs (64; 78) that are connected to a front end part of the first framework portion, provided on the main body portion so as to extend to the front pillar lower portion (26) while leaning downward in a vehicle-height direction as the plurality of second ribs (64, 78) extend rearward in the vehicle front-rear direction, and provided to be erected from the vertical wall portion (34) along the vehicle width direction and spaced apart from each other, wherein
the first framework portion and the second framework portion are joined to the front pillar lower portion (26).

2. A vehicle front structure (10) comprising:
a suspension tower portion (20) for supporting an upper end part of a suspension (19) of a front wheel (13);
a front pillar lower portion (26);
a vertical wall portion (34) extending in a vehicle front-rear direction and a vehicle-height direction;
a main body portion that includes the vertical wall portion (34) and is integrally provided from the suspension tower portion (20) to the front pillar lower portion (26) side;
a first framework portion including a first bead (92) that is provided on the main body portion so as to extend in the vehicle front-rear direction from an upper end part side of the suspension tower portion (20) to an upper end part side of the front pillar lower portion (26), and that protrudes from the vertical wall portion (34) in a thickness direction of the vertical wall portion (34);
a second framework portion including a second bead (94) that is connected to a front end part of the first framework portion, is provided on the main body portion so as to extend downward in a vehicle-height direction as the second bead (94) extends rearward in a vehicle front-rear direction, and protrudes from the vertical wall portion (34) in the thickness direction of the vertical wall portion (34), wherein
the first framework portion and the second framework portion are connected to the front pillar lower portion (26).

3. The vehicle front structure (10) according to claim 1 further comprising at least either a plurality of first connecting ribs (62) that connect the plurality of first ribs (58; 72) and a plurality of second connecting ribs (68) that connect the plurality of second ribs (64; 78).

4. The vehicle front structure (10) according to claim 3, wherein at least some of the plurality of first connecting ribs (62) are formed in a truss shape.

5. The vehicle front structure (10) according to any one of claims 3 or 4, wherein at least some of the plurality of second connecting ribs (68) are formed in a truss shape.

6. The vehicle front structure (10) according to any one of claims 3 to 5, wherein the plurality of first ribs (58; 72) are thicker than the plurality of first connecting ribs (62).

7. The vehicle front structure (10) according to any one of claims 3 to 6, wherein the plurality of second ribs (64; 78) are thicker than the plurality of second connecting ribs (68).
